# EUROPÄISCHE PATENTSCHRIFT

(11) **EP 2 139 739 B1**
(45) Veröffentlichungstag und Bekanntmachung des Hinweises auf die Patenterteilung: **01.02.2012**
(21) Anmeldenummer: 08718047.7
(22) Anmeldetag: 19.03.2008
(51) Int. Cl.: B60W 30/18, B60W 10/06, B60W 10/08, B60W 20/00, G08G 1/16

(54) **VERFAHREN UND VORRICHTUNG ZUR PRÄDIKTIVEN STEUERUNG UND/ODER REGELUNG EINES HYBRIDANTRIEBS IN EINEM KRAFTFAHRZEUG SOWIE HYBRIDFAHRZEUG**
METHOD AND DEVICE FOR PREDICTIVE CONTROL AND/OR REGULATION OF A HYBRID DRIVE IN A MOTOR VEHICLE AND HYBRID VEHICLE
PROCÉDÉ ET DISPOSITIF DE COMMANDE ET/OU DE RÉGULATION PRÉDICTIVE D'UN ENTRAÎNEMENT HYBRIDE DANS UN VÉHICULE AUTOMOBILE ET VÉHICULE AUTOMOBILE HYBRIDE

(30) Priorität: 20.03.2007 DE 102007013866; 20.03.2007 DE 102007013864; 20.03.2007 DE 102007013865; 19.03.2008 DE 102008015046
(43) Veröffentlichungstag der Anmeldung: 06.01.2010
(73) Patentinhaber: Continental Teves AG & Co. OHG, 60488 Frankfurt (DE)
(72) Erfinder: STÄHLIN, Ulrich, 65760 Eschborn (DE); BAUER, Roger, 60326 Frankfurt Am Main (DE)
(86) Internationale Anmeldenummer: PCT/EP2008/053326
(87) Internationale Veröffentlichungsnummer: WO 2008/113836

(56) Entgegenhaltungen:
- EP-A- 1 179 446
- EP-A- 1 270 303
- DE-A1- 10 008 665
- DE-A1- 10 035 027
- DE-A1- 10 128 758
- DE-A1- 10 226 143
- DE-A1- 10 360 142
- DE-A1- 19 807 291
- DE-A1-102005 024 403

## Beschreibung

Die vorliegende Erfindung betrifft ein Verfahren zur prädiktiven, d.h. vorausschauenden, Steuerung und/oder Regelung eines Hybridantriebs in einem Kraftfahrzeug, wobei die Steuerung und/oder Regelung über eine Auswahl der Betriebsstrategie erfolgt. Die Auswahl der Betriebsstrategie erfolgt dabei derart, dass ein bestimmtes Betriebsziel, beispielsweise ein minimaler Verbrauch von Kraftstoff, erreicht wird. Die Erfindung betrifft ferner eine entsprechende Vorrichtung sowie ein Hybridfahrzeug.

Hybridantriebe werden in zwei Grundtypen und verschiedene Misch- oder Zwischenformen unterteilt. Beim parallelen Hybrid sind sowohl Verbrennungsmotor als auch Elektromotor mechanisch mit den Antriebsrädern gekoppelt. Das Fahrzeug kann entweder rein elektrisch, rein verbrennungsmotorisch oder von beiden Motoren anteilig angetrieben werden. Beim seriellen Hybrid besteht der Antriebsstrang aus einer seriellen Anordnung mit einem Verbrennungsmotor, einem Generator und einem Elektromotor. Der Verbrennungsmotor treibt den Generator an und der erzeugte Strom dient entweder vollständig dem Betrieb des Elektromotors oder wird teilweise in der Batterie zwischengespeichert. Zwischen diesen beiden Randtypen sind verschiedene Mischformen möglich. Bei dem für die Anwendung wichtigen, sogenannten leistungsverzweigenden Hybrid wird ein Teil der verbrennungsmotorischen Leistung auf die Antriebsräder direkt übertragen. Die restliche Leistung wird über ein oder mehrere Planetengetriebe und zwei Elektromotoren auf die Antriebsräder sowie in die Batterie übertragen. Beim kombinierten Hybrid besteht die Möglichkeit, die Leistung des Verbrennungsmotors durch Schließen einer Kupplung direkt mechanisch an die Räder zu übertragen, um den Gesamtwirkungsgrad des Hybridantriebssystems zu verbessern.

Die Betriebsstrategie eines Hybridfahrzeugs stellt die logische und zeitliche Abfolge aller Betriebszustände eines Hybridantriebs dar. Über die Steuerung und/oder Regelung des Antriebsstrangs eines Hybridfahrzeugs legt die Betriebsstrategie fest, in welcher Weise der Elektromotor und/oder der Verbrennungsmotor eingesetzt werden, um gewünschte Eigenschaften des Antriebs zu erreichen. Beispielsweise muss die Betriebsstrategie für Vollhybridfahrzeuge folgende Betriebszustände unterscheiden und einstellen können:
1. rein verbrennungsmotorische Fahrt,
2. Lastpunktverschiebung,
3. rein elektrische Fahrt,
4. Antriebsunterstützung,
5. Fahren ohne Antrieb (Segeln),
6. Rekuperation von Bremsenergie und
7. automatischer Start-Stopp.

Im rein verbrennungsmotorischen Betriebszustand befindet sich der Elektromotor in einem stromlosen Leerlaufbetrieb und der Verbrennungsmotor muss die gesamte Antriebsleistung allein aufbringen. Bei der Lastpunktverschiebung verschiebt das additive Generatormoment des Elektromotors bei fester Motordrehzahl den Lastpunkt des Verbrennungsmotors entlang der Drehmomentachse. Sobald der Elektromotor die gesamte Antriebsleistung bereitstellt, befindet sich das Fahrzeug in dem rein elektrischen Betriebszustand, welcher eine e-missionsfreie Fahrt ohne Kraftstoffverbrauch gestattet. Durch Addition eines elektromotorischen Moments ist eine Entlastung des Verbrennungsmotors oder darüber hinaus sogar eine Erhöhung des Gesamtantriebsmoments möglich, was als Antriebsunterstützung oder Boost-Betrieb bezeichnet wird und einer Steigerung der Fahrleistung dient. Im Segelbetrieb, zum Beispiel beim Ausrollen, fährt das Fahrzeug emissionsfrei ohne Antrieb. In diesem Betriebszustand sind typischerweise der Verbrennungsmotor ausgeschaltet, der Elektromotor befindet sich im Leerlaufbetrieb und die Räder sind beispielsweise über eine geöffnete Kupplung vom Antriebsstrang entkoppelt. Bei dem Betriebszustand des Rekuperationsbetriebs kann beispielsweise bei Verzögerungsmanövern oder bei Bergabfahrten, bei denen das geforderte Antriebsmoment negativ ist, die E-Maschine generatorisch betrieben werden, somit ohne Einsatz von Kraftstoff elektrische Energie erzeugen und dabei gleichzeitig die Bremsen schonen. Bei der Start-Stopp-Funktion wird der Verbrennungsmotor in den Stillstandsphasen des Hybridfahrzeugs abgeschaltet und nach Beendigung der Stillstandsphase ohne Betätigung des Zündschlüssels automatisch wieder gestartet. Für andere Hybridfahrzeugtypen können weitere Betriebszustände definiert und realisiert werden.

Die Wahl der Betriebsstrategie wird bei allen bisher auf dem Markt erhältlichen Kraftfahrzeugen als automatisierte Funktion realisiert, da der Fahrer mit der gleichzeitigen Vorgabe des Lenkwinkels, des Gesamtantriebsmoments und der richtigen Betriebsstrategie bzw. der Aufteilung des Gesamtantriebsmoments überfordert wäre.

Die Betriebsstrategie gegenwärtiger Hybridfahrzeuge orientiert sich an den augenblicklichen oder aus der Vergangenheit vorliegenden Informationen über das Fahrzeug, z.B. die Geschwindigkeit, der Zustand der Energiespeicher sowie das Fahrerverhalten (z.B. Brems- und/oder Beschleunigungswunsch). Zuverlässige Betriebsstrategien lassen sich daher nur mit a priori bekanntem Wissen aufstellen, so dass vorausschauende Strategien mit einem großen Unsicherheitsfaktor behaftet sind, da aus der Vergangenheit auf ein mögliches Verhalten in der Zukunft geschlossen werden muss.

Die vorausschauende Betriebsführung bei Hybridfahrzeugen auf Basis eines Navigationssystems mit digitaler Karte wird bereits von Fahrzeugherstellern und Forschungsinstituten erforscht.

Aus der Dissertation "Prädiktive Antriebsregelung zum energieoptimalen Betrieb von Hybridfahrzeugen", Michael Back, Universität Karlsruhe (TH), Fakultät für Elektrotechnik und Informationstechnik, 2005, Universitätsverlag Karlsruhe 2006 ist bereits ein Verfahren zur Steuerung des Antriebsstrangs eines Hybridfahrzeugs bekannt, welches eine Verbesserung bisheriger Betriebsstrategien für Hybridfahrzeuge hinsichtlich des Kraftstoffverbrauchs beinhaltet. Hierfür wurden Informationen aus dem Umfeld des Kraftfahrzeugs in den vorausschauenden Betrieb des Antriebsstrangs integriert. In der bekannten prädiktiven Regelung wurde ein Störgrößenmodell zur Beschreibung der Umgebungseinflüsse verwendet, bei dem statische und dynamische Umgebungseigenschaften verarbeitet wurden. Für die Prädiktion der vorausliegenden Steigung sowie des Beschleunigungs- und Geschwindigkeitsverlaufs auf Basis ortsfester, statischer Informationen wurde eine Navigationskarte mit den Streckenattributen Fahrbahnsteigung, Geschwindigkeitsbeschränkungen und Kurvenkrümmung verwendet. Die genannten Größen des Parametervektors hängen von der aktuellen Position des Fahrzeugs ab und stellen eine Parameterdarstellung des vorausliegenden Streckenverlaufs dar. Eine Erweiterung des Parametervektors um die Einflussgrößen Sichtweite, Verkehrsdichte, vorausfahrendes Fahrzeug oder Wetter wird diskutiert. Der Parametervektor wird bei dem bekannten Modell dafür verwendet, eine Grenzgeschwindigkeit zu bestimmen, welche die Wunschgeschwindigkeit des Fahrers in einem bestimmten Streckenabschnitt darstellt. Für die Erfassung der dynamischen Einflüsse der Umwelt im Störgrößenmodell wurden in der Arbeit das Radarsystem des Abstandsregeltempomaten, Kamerasysteme und eine Wetterbestimmung zwar diskutiert, jedoch in dem Modell nicht verwendet. Die Kraftstoffeinsparung eines derartigen Systems liegt jedoch nur bei wenigen Prozent.

In der Druckschrift DE 10 2006 000 306 A1 wird ein Hybridfahrzeug und ein zugehöriges Steuerungsverfahren offenbart. Das Hybridfahrzeug weist ein Bremssteuerungsmodul auf, das eine Widerstandsbremskraftanforderung, die von dem Mechanismus zur Zufuhr/Abgabe elektrischer Leistung und mechanischer Leistung zu der Antriebswelle abzugeben ist, und eine Regenerationsbremskraftanforderung einstellt, die von dem Motor zu der Antriebswelle abzugeben ist, und den Mechanismus zur Zufuhr/Abgabe elektrischer Leistung und mechanischer Leistung sowie den Motor steuert. Die Steuerung wird dabei derart vorgenommen, dass die Abgabe der Widerstandsbremskraftanforderung und der Regenerationsbremskraftanforderung zu der Antriebswelle gewährleistet wird. Wenn der Mechanismus zur Zufuhr/Abgabe elektrischer Leistung und mechanischer Leistung bei der Abgabe der Widerstandsbremskraftanforderung vollständig versagt oder lediglich einen Teil der Widerstandsbremskraftanforderung abgibt oder wenn der Motor vollständig bei der Abgabe der Regenerationsbremskraftanforderung versagt oder lediglich einen Teil der Regenerationsbremskraftanforderung abgibt, führt das Bremssteuerungsmodul eine Bremskraftunterstützungssteuerung aus, die den Mechanismus zur Zufuhr/Abgabe elektrischer Leistung und mechanischer Leistung, den Motor und die Bremskraftabgabeeinheit zur Gewährleistung einer unterstützenden Abgabe von Bremskraft steuert. Dies verhindert eine ungewollte Verringerung der Bremskraft, die einem Hybridfahrzeug beaufschlagt wird.

Aus der Druckschrift DE 195 36 512 A1 ist außerdem ein Gangwechselsteuerungsverfahren für Automatikgetriebe in Kraftfahrzeugen bekannt. Zur Komfortoptimierung, Reduzierung der Schalthäufigkeit, besserer Zuordnung von Eingriff und tatsächlichen Fahrsituationsbedingungen sowie zur Verringerung der notwendigen Fahrereingriffe wird in dieser Druckschrift eine Gangwechselsteuerung angegeben, die in Abhängigkeit von Eingangssignalen durchgeführt wird, die von außerhalb des Fahrzeugs gebildeten Informationen erhalten werden und die Umgebungsbedingungen des Fahrzeugs wiedergeben. Außerhalb des Fahrzeugs gebildete Informationen über Umgebungsbedingungen werden hierbei beispielsweise durch Satellitennetzwerke (GPS), Radio-Daten-Systeme (RDS, European Radio Data System), Mobilfunkeinrichtungen, elektronischen Verkehrsschildern und/oder für Fahrzeugnavigationssysteme digital gespeicherter Landkarten mit Straßen- und Ortskennzeichnung verwendet. Ferner können entsprechende Informationen auch mit optischen Sensoren erfasst und mittels Bildverarbeitung im Fahrzeug verfügbar gemacht werden. Das Steuergerät ermittelt eine Gangwahlstrategie, welche ohne eine Möglichkeit der Einflussnahme durch den Fahrer zu einem automatischen Gangwechsel führt. Hierbei kann der Fahrer zwar über den Positionswahlhebel oder über einen Programmwahlschalter den Gangwechsel beschränkt beeinflussen, grundsätzlich wird ein Gangwechsel jedoch abhängig von Energie-, Sicherheits-, Komfort-, Schadstoffemissions-, Geräusch- und/oder fahrertypbezogene Vorgaben automatisch ohne ein vorheriges Quittieren durch den Fahrer durchgeführt.

Weiterhin ist es bekannt, dem Fahrer eine Information über den Momentanverbrauch an Kraftstoff (Economy-Anzeige) zur Verfügung zu stellen. Diese Economy-Anzeige bietet eine Möglichkeit für den Fahrer, seinen Fahrstil hinsichtlich des Verbrauchs zu beurteilen und ggf. im Hinblick auf eine Verfügung zu stellen. Diese Economy-Anzeige bietet eine Möglichkeit für den Fahrer, seinen Fahrstil hinsichtlich des Verbrauchs zu beurteilen und ggf. im Hinblick auf eine Verbrauchsreduzierung, insbesondere durch ein iteratives Ausprobieren verschiedener Gaspedalstellungen, anzupassen. Die energiebezogene Vorgabe in Form einer Verbrauchsminimierung wird auf diese Weise nur unzulänglich erreicht. Zum einen kann der Fahrer dabei nur die aktuelle Fahrsituation berücksichtigen und zum anderen wird dem Fahrer zum Betriebsziel Verbrauchsminimierung keine konkret hierfür erforderliche Fahrbetriebsstrategie angeboten. Für weitere Betriebsziele wie beispielsweise die maximale Aufladung des elektrischen Energiespeichers ist es noch schwieriger, dem Fahrer entsprechende Entscheidungsmöglichkeiten bzw. Betriebsstrategien anzubieten.

Die gallangs bil dende DE 102 26 143 A1 beschreibt ein Verfahren zum Steuern eines Hybridantriebs bei einem Kraftfahrzeug in Abhängigkeit von Informationen über eine aktuelle und eine zu erwartende Fahrsituation, die über fahrzeuginterne und fahrzeugexterne Kommunikationsquellen erfasst werden. Abhängig von diesen Informationen sowie von energie-, sicherheits-, komfort-, schadstoffemissions-, geräusch- und/oder fahrertypbezogenen Vorgaben wird eine Fahrbetriebsstrategie zur Steuerung wenigstens einer der mehreren Antriebskomponenten ermittelt. Um eine streckenabhängige Vorhersage der zu erwartenden Energiebilanz zu ermöglichen und somit den elektrischen Antrieb des Kraftfahrzeugs effektiver zu nutzen, werden außerdem Fahrstreckendaten mit fahrzeugspezifischen Daten verknüpft, wodurch sich ein der Fahrstrecke zugehöriges Energieprofil ergibt, das bei der Ermittlung der Fahrbetriebsstrategie berücksichtigt wird. In Abhängigkeit von der Fahrbetriebsstrategie können eine oder mehrere Komponenten des Hybridantriebs automatisch aktiviert oder deaktiviert werden.

In der eben falls galtungslifdenden EP 1 270 303 A2 wird ein Verfahren zum Steuern eines Antriebsstrangs eines Hybridfahrzeugs offenbart. Dabei wird abhängig von Daten, welche eine zu absolvierende Fahrstrecke charakterisieren, eine Betriebsstrategie für die Komponenten des Antriebsstrangs festgelegt. Ausgehend von der gewählten Betriebsstrategie und den Streckendaten wird anschließend ein zu erwartender Energieverbrauch und eine Zeitspanne, für die die Energie zur Verfügung gestellt werden kann, berechnet. Wird die Zeitspanne als ausreichend erkannt, so wird der Antriebsstrang gemäß der Betriebsstrategie gesteuert. Wird die berechnete Zeitspanne hingegen als nicht ausreichend erkannt, so wird eine alternative Betriebsstrategie festgelegt und die sich daraus ergebende Zeitspanne erneut geprüft.

Aufgabe der Erfindung ist es, ein verbessertes Verfahren zur vorausschauenden Steuerung und/oder Regelung für einen Hybridantrieb anzugeben, das ein größeres Kraftstoffeinsparpotential besitzt oder andere Betriebsziele besser erreichen kann (z.B. ausgeglichener Ladezustand des elektrischen Energiespeichers oder maximale Aufladung des elektrischen Energiespeichers). Die Aufgabe besteht weiter darin, eine entsprechend verbesserte Vorrichtung zur prädiktiven Steuerung und/oder Regelung sowie ein entsprechend verbessertes Hybridfahrzeug anzugeben.

Die obige Aufgabenstellung wird gelöst durch ein Verfahren. and eine Vorrichtung gemäβ den unalhangijen Ansprüchen.

Hierbei umfasst eine Kommunikation des Kraftfahrzeugs mit ortsfesten und/oder sich bewegenden Gegenstellen den Austausch von aktuellen Informationen mit Sendern, Empfängern und/oder Vermittlern über im Fahrzeug vorhandene Kommunikationseinrichtungen und/oder im Fahrzeug vorhandene Sensoren. Nicht umfasst sind von den kommunikationsbasierten Informationen die durch digitale Karten, die im Kraftfahrzeug vorhanden sind, erhaltenen Informationen basierend auf dem GPS-Signal, da die Karten häufig nicht auf dem aktuellsten Stand sind. Diese Informationen können jedoch, wie weiter unten ausgeführt, ergänzend herangezogen werden. Durch das erfindungsgemäße Verfahren kann der Betrieb des Hybridfahrzeugs optimiert werden und insbesondere eine größere Kraftstoffersparnis als bei herkömmlichen Verfahren erreicht werden, da das Kraftfahrzeug vorausschauend und sehr flexibel auf neue Situationen reagieren kann. Ferner ist es besser möglich, weitere Betriebsziele, z.B. die maximale Ladung des elektrischen Energiespeichers, zu realisieren.

Auch anhand wird von weiteren kommunikationsbasierten Informationen erfindungsgemäß durch die Mittel zur Auswahl der Betriebsstrategie mindestens eine Information über die zukünftig von dem Kraftfahrzeug wahrscheinlich einzunehmende Geschwindigkeit ermittelt , die zur Auswahl der Betriebsstrategie herangezogen wird. Diese Information kann insbesondere durch Auswertung der Kolonnengeschwindigkeit der vorausfahrenden Kraftfahrzeuge und/oder durch Auswertung einer Baustelleninformation und/oder mittels Schildererkennung und/oder mittels Ampelstatuserkennung per Kamera und/oder auf Basis von Fahrzeugleitinformationen ermittelt werden. Prädiktive Betriebsstrategien werden hierdurch mit zuverlässigen Daten gestützt.

Erfindungs gemäβ ist vorgesehen, dass, wenn aus der von den Mitteln zur Auswahl der Betriebsstrategie erzeugten, mindestens einen Information über die zukünftig von dem Kraftfahrzeug wahrscheinlich einzunehmende Geschwindigkeit eine zukünftige Geschwindigkeitsbegrenzung abgeleitet wird, als Betriebsstrategie im ersten Abschnitt der Geschwindigkeitsbegrenzung der Betriebszustand 'elektromotorischer Betrieb' ausgewählt wird. Ist bspw. eine Geschwindigkeitsbegrenzung bekannt, so wird beispielsweise bei einer kurzen Überschreitung dieser Geschwindigkeit trotzdem weiter mit dem Elektromotor gefahren, weil anzunehmen ist, dass in Kürze wieder die Geschwindigkeitsbegrenzung eingehalten wird.

In einem besonders bevorzugten Ausführungsbeispiel ist die kommunikationsbasierte Information eine Information aus einer Fahrzeug-zu-Infrastruktur- (FzI-) und/oder einer Fahrzeug-zu-Fahrzeug- (FzF-) Kommunikation.

Die FzF-Kommunikation wird auch als Car-2-Car Communication (C2C) bezeichnet. Mit Hilfe der FzF-Kommunikation und lassen sich durch die gezielte Weitergabe von Informationen Verkehrsflüsse optimieren, hier insbesondere im Hinblick auf eine kraftstoffsparende Betriebsweise eines Hybridfahrzeugs. Die FzF-Kommunikation kann mit vorausfahrenden und/oder entgegenkommenden Fahrzeugen erfolgen. Durch die Kommunikation der Fahrzeuge untereinander bzw. der Fahrzeuge mit der Infrastruktur kann jedes Fahrzeug in einem solchen spontanen Informationsverbund die Rolle des Senders, Empfängers oder Vermittlers (Routers) übernehmen. Dadurch baut sich ähnlich eines Staffellaufs eine Informationskette auf. Durch dieses sogenannte '*Multi-Hopping'-Verfahren lassen sich die Informationen über eine größere Entfernung weiter tragen. Realisiert wird der Datenaustausch zwischen den Kraftfahrzeugen mit sogenannten 'Ad-hoc-Netzen'. Diese Kurzstrecken-Verbindungen bauen sich bei Bedarf spontan zwischen den Fahrzeugen auf, organisieren sich selbst und benötigen dazu keine externe Infrastruktur. Die Effizienz der Fahrzeug-Fahrzeug-Kommunikation steigt mit der Anzahl der entsprechend ausgestatteten Fahrzeuge im Markt. Als Kommunikationsprotokolle für den Betrieb von derartigen Ad-hoc-Netzwerken können der Standard WLAN IEEE 802.11p, HY-PERLAN2, UMTS-Funkhardware, welche im Zeitduplex-Modus arbeitet (ULTRA-TDD), GSM (Standard für volldigitale Mobilfunknetze), GPRS (General Packet Radio Service), LTE (ein Mobilfunkstandard, auch als HSOPA oder Super 3G bezeichnet, der als Nachfolger des UMTS dienen soll) oder WiMAX (Synonym für den Standard IEEE 802.16) verwendet werden.

Bei der FzI-Kommunikation erfolgt die Kommunikation zwischen den Kraftfahrzeugen und ortsfesten Sendern, Empfängern und/oder Routern, die an der Wegstrecke der Fahrzeuge angeordnet sind. Die Kommunikation erfolgt mit den gleichen Mitteln wie bei der FzF-Kommunikation. Beispiele für Infrastruktureinrichtungen, mit denen eine Kommunikation erfolgen kann, sind Ampelanlagen, die nicht nur ihren aktuellen Zustand, sondern beispielsweise auch die Dauer des aktuellen Zustands mitteilen. Ebenso kann die Kommunikation mit Fahrzeugleiteinrichtungen oder Baustelleneinrichtungen erfolgen, die Informationen über optimale Streckenverläufe bei Störungen auf der voraus liegenden Strecke oder Informationen über Richtgeschwindigkeiten liefern. An gefährlichen Stellen, z.B. Tunneln, Brücken, Bahnübergängen, etc. kann mittels FzI-Kommunikation vor diesen Gefahren gewarnt werden. FzI-Kommunikation kann auch als Hilfsmittel für die FzF-Kommunikation verwendet werden, indem Informationen zuerst vom Fahrzeug an die Infrastruktur gesendet werden und von dieser dann (u.U. nach etwas Wartezeit zur Überbrückung von Lücken im Verkehrsaufkommen) an weitere Fahrzeuge weitergegeben werden.

Es ist von Vorteil, wenn mittels der mindestens einen kommunikationsbasierten Information mindestens eine Information über den Höhen- und/oder Kurvenverlauf der zukünftig von dem Kraftfahrzeug zurückzulegenden Strecke und/oder den aktuellen Verkehrszustand der zukünftig zu durchfahrenen Strecke und/oder eine Baustelleninformation und/oder eine Information über die Kolonnengeschwindigkeit der umgebenden Kraftfahrzeuge ermittelt wird. Diese Informationen werden durch die Mittel zur Auswahl der Betriebsstrategie erzeugt. Die Informationen können dazu dienen, daran angepasst eine Vorhersage über die zu erwartenden Geschwindigkeit zu erstellen. Mit dieser Vorhersage ist es möglich, die zukünftig notwendige Antriebsleistung zu bestimmen, die zur Auswahl der Betriebsstrategie herangezogen wird. Insbesondere ist bei Baustellen davon auszugehen, dass sich die Geschwindigkeit nicht deutlich ändert. Daher ist die Betriebsstrategie des Hybridantriebs an die vermutete nahezu konstante Geschwindigkeit anzupassen. Auch bei der Ermittlung einer Kolonnengeschwindigkeit kann die Betriebsstrategie des Hybridantriebs an diese Geschwindigkeit angepasst werden.

In einer weiteren bevorzugten Ausführungsform des erfindungsgemäßen Verfahrens bzw. der erfindungsgemäßen Vorrichtung wird durch die Mittel zur Auswahl der Betriebsstrategie dann, wenn aus der mindestens einen Information über die zukünftig von dem Kraftfahrzeug wahrscheinlich einzunehmende Geschwindigkeit ein zukünftiger Kraftfahrzeugstopp abgeleitet wird, als Betriebsstrategie sofort der Betriebszustand 'elektromotorischer Betrieb' und/oder 'Rekuperationsbetrieb' ausgewählt. Wird beispielsweise eine rote Ampel erkannt, so ist damit zu rechnen, dass das Fahrzeug bis zum Stillstand abgebremst wird. Daher kann bei Gaswegnahme des Fahrers sofort in den Rekuperationsbetrieb geschaltet und evtl. sogar eine größere Verzögerung und damit eine größere Rekuperation eingestellt werden. Aus der Kenntnis einer bevorstehenden Bremsung und des damit verbundenen Rekuperationspotenzials wird der Verbrennungsmotor frühzeitig abgeschaltet und es wird rein elektrisch gefahren werden. Vorzugsweise wird per Fahrzeug-zu-Infrastruktur-Kommunikation prädiktiv das Ampelverhalten übermittelt und daher schon früher eine angepasste Betriebsstrategie für das jeweilige Fahrzeug verwendet.

Wenn aufgrund der mindestens einen kommunikationsbasierten Information durch die Mittel zur Auswahl der Betriebsstrategie mindestens eine Information über einen Abschnitt auf der zukünftig von dem Kraftfahrzeug zurückzulegenden Strecke ermittelt wird, auf dem eine geringe Lärmemission angezeigt ist, z.B. in Gebieten mit gesonderten Betriebsverhalten wie Spielstraßen, Einfahrten zu Privatgelände, verkehrsberuhigte Straßen usw., dann wird in einer bevorzugten Ausführungsform hieraus für diesen Abschnitt die Betriebsstrategie mit dem Betriebszustand 'elektromotorischer Betrieb' abgeleitet.

Zur Absicherung der kommunikationsbasierten Informationen kann zusätzlich bei der Auswahl der Betriebsstrategie durch die Mittel zur Auswahl der Betriebsstrategie mindestens eine Information aus einer digitalen Karte berücksichtigt werden. Diese Vorgehensweise erhöht die Stabilität des Verfahrens.

Weitere Merkmale, Vorteile und Anwendungsmöglichkeiten der vorliegenden Erfindung ergeben sich auch aus der nachfolgenden Beschreibung eines Ausführungsbeispiels des erfindungsgemäßen Verfahrens bzw. der erfindungsgemäßen Vorrichtung anhand einer Figur. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigt schematisch:

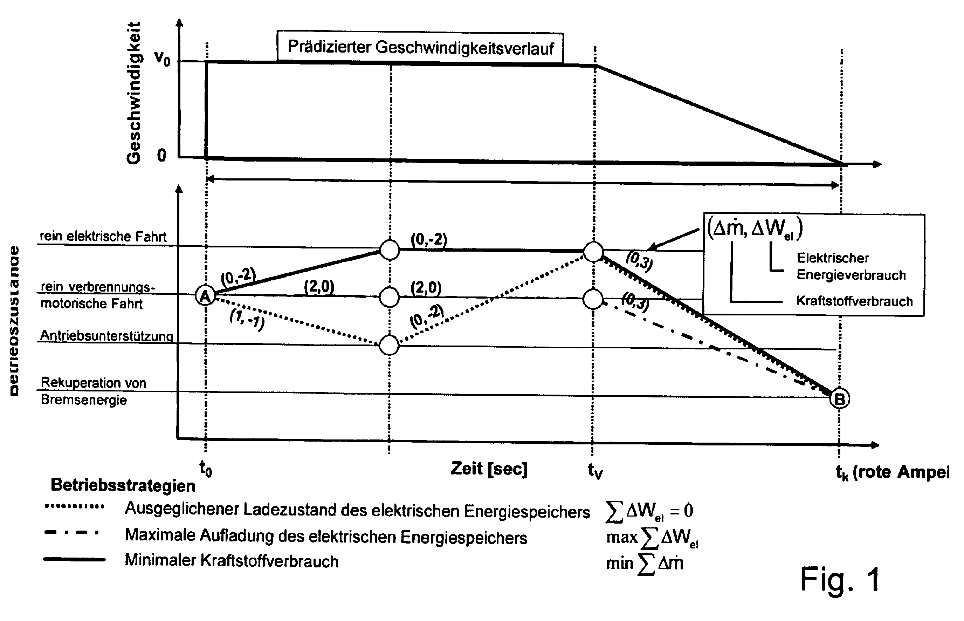

- Figur 1: einen prädizierten Geschwindigkeitsverlauf und drei zugehörigen Betriebsstrategien zur Realisierung unterschiedlicher Betriebsziele aufgetragen in einem Geschwindigkeits-Zeit-und einem Betriebszustands-Zeit-Diagramm.

In Folgenden wird ein erfindungsgemäßes Verfahren bzw. eine erfindungsgemäße Vorrichtung am Beispiel einer FzI-Kommunikation zwischen einer Ampelanlage und einem Hybridfahrzeug dargestellt. Hierbei werden drei prädiktive Betriebsstrategien für den Fall erläutert, wenn aus der mindestens einen Information über die zukünftig von dem Kraftfahrzeug wahrscheinlich einzunehmende Geschwindigkeit auf einen zukünftigen Kraftfahrzeugstopp geschlossen werden kann.

In dem Beispiel wird davon ausgegangen, dass das Kraftfahrzeug zum Zeitpunkt t₀ rein verbrennungsmotorisch fährt (siehe Punkt A im Diagramm, die die Betriebszustände angibt) und mittels FzI-Kommunikation von der Ampelanlage die Information über den bevorstehenden Kraftfahrzeugstopp erhält. Aus der aktuellen Geschwindigkeit v₀ im Punkt A und dem fahrertypischen Fahrstil lassen sich der Zeitpunkt B des Kraftfahrzeugstopps tₖ (rote Ampel) und ein prädizierter Geschwindigkeitsverlauf bis zum Fahrzeugstopp ermitteln. Der prädizierte Geschwindigkeitsverlauf für dieses Beispiel ist im Geschwindigkeits-Zeit-Diagramm in Figur 1 über der Zeit aufgetragen. Weiterhin wird in dem Beispiel vereinfachend davon ausgegangen, dass das Kraftfahrzeug bis zu dem aus dem prädizierten Fahrzeugstopp abgeleiteten Beginn der Fahrzeugverzögerung tᵥ in folgenden drei Betriebszuständen gefahren bzw. zwischen folgenden vier Betriebszuständen umgeschaltet werden kann:
1. rein elektrische Fahrt
2. rein verbrennungsmotorische Fahrt
3. Antriebsunterstützung durch den Elektromotor
4. Rekuperation von Bremsenergie

Die betrachteten Betriebszustände haben unterschiedlichen Einfluss auf den Verbrauch von Kraftstoff (Δ*ṁ*) und elektrischer Energie (Δ*Wₑₗ*). Je nach Ladungszustand der elektrischen Energieversorgung (Batterie) sind mehrere prädiktive Betriebsstrategien mit unterschiedlichen Zielsetzungen vorstellbar.

Die nachfolgend näher erläuterten prädiktiven Betriebsstrategien können anschaulich als 2-dimensionaler Graph (siehe Betriebszustand-Zeit-Diagramm in Figur 1) dargestellt werden. Auf der Abszisse sind die Zeit und resultierend aus der FzI-Kommunikation auch der Prädiktionshorizont aufgetragen. Der betrachtete Prädiktionshorizont wird diskretisiert und in Zeitschritte geeigneter Länge unterteilt (senkrechte gestrichelte Linien). Auf der Ordinatenachse sind diejenigen Betriebszustände aufgetragen, die der Betriebsstrategie im betrachteten Prädiktionshorizont zur Verfügung stehen. In jedem diskreten Zeitpunkt können theoretisch alle Betriebszustände von der Betriebsstrategie eingestellt werden. Durch die Verbindung der Betriebszustände eines Zeitpunkts mit den Betriebszuständen aus dem vorausgehenden und dem nachfolgenden Zeitpunkt entsteht ein 2-dimensionaler Graph. An den Verbindungslinien, welche die Betriebszustandsübergänge von einem Zeitpunkt zum nächsten markieren, ist in Klammern an erster Stelle der jeweilige Verbrauch an Kraftstoff (Δ*ṁ*) und an zweiter Stelle der Verbrauch (positiv) oder Gewinn (negativ) an elektrischer Energie (Δ*Wₑₗ*) angegeben.

Durch die Diskretisierung des Zeitintervalls und die Einteilung in mehrere in einem Zeitschritt mögliche Betriebszustände ergeben sich für die Betriebsstrategie unterschiedliche Trajektorien, um von der Ausgangssituation (hier: A) zu der am Ende des Prädiktionsintervalls zu erreichenden Zielsituation (hier: B) zu gelangen. Die Betriebsstrategie wählt diejenige Trajektorie aus, welche die aktuelle Zielvorgabe (Betriebsziel) am besten umsetzt.

Wie in dem nachfolgenden, in Figur 1 dargestellten Beispiel näher erläutert wird, kann die Zielvorgabe beispielsweise minimaler Kraftstoffverbrauch, ausgeglichene Ladungsbilanz des elektrischen Energiespeichers oder maximale Aufladung des elektrischen Energiespeichers lauten. Entsprechend des gewünschten Betriebsziels wird die zugehörige Trajektorie ausgewählt.

Eine mögliche Methode zur Bestimmung der optimalen Trajektorie ist die Dynamische Programmierung.

Die erste Strategie (gepunktet im Betriebszustand-Zeit-Diagramm dargestellt) strebt einen ausgeglichenen Ladezustand des Energieversorgungssystems nach dem Kraftfahrzeugstopp an, d.h. der Ladezustand des Energieversorgungssystems muss nach dem Stopp des Fahrzeugs vor der Ampel den gleichen Ladezustand aufweisen wie zum Zeitpunkt t₀ des Erhalts der Ampelinformation per FzI-Kommunikation. Um dieses Ziel zu erreichen, muss die Betriebsstrategie aus der Kenntnis des Verbrauchs von Kraftstoff und elektrischer Energie in den einzelnen Betriebszuständen eine geeignete Aufteilung der Fahrzustände vornehmen. Dies wird hier erreicht durch eine Umschaltung von der rein verbrennungsmotorischen Fahrt in die Fahrt mit Antriebsunterstützung, die elektrische Energie verbraucht. Diese wird anschließend, im Abbremsvorgang durch Fahren im Rekuperationszustand wieder gewonnen.

Die zweite Strategie (strichpunktiert im Betriebszustand-Zeit-Diagramm dargestellt) berücksichtigt eine maximale Aufladung der Energiespeicher nach dem Stopp des Kraftfahrzeugs vor der Ampel. Mit der genannten Auswahl der Betriebszustände wird dieses Optimierungsziel durch eine rein verbrennungsmotorische Fahrt bis zum Zeitpunkt der Abbremsung erreicht. Mit der sich daran anschließenden regenerativen Fahrzeugverzögerung wird das elektrische Energiespeichersystem maximal geladen.

In der dritten Strategie (als durchgezogene Linie im Betriebszustand-Zeit-Diagramm dargestellt) wird das Ziel verfolgt, den Kraftstoffverbrauch zu minimieren. Gemäß dieser Strategie fährt das Fahrzeug bis zum Zeitpunkt der Abbremsung rein elektrisch, ohne Kraftstoff zu verbrauchen, und völlig emissionsfrei. In der sich anschließenden Verzögerungsphase, in der das Kraftfahrzeug regenerativ abgebremst wird, wird ebenfalls kein Kraftstoff verbraucht.

## Patentansprüche

1. Verfahren zur prädiktiven Steuerung und/oder Regelung eines Hybridantriebs in einem Kraftfahrzeug, wobei die Steuerung und/oder Regelung über eine Auswahl der Betriebsstrategie abhängig von einem gewünschten Betriebsziel erfolgt, wobei bei der Auswahl der Betriebsstrategie mindestens eine kommunikationsbasierte Information berücksichtigt wird, die mittels einer Kommunikation des Kraftfahrzeugs mit einer oder mehreren ortsfesten und/oder sich bewegenden Gegenstellen erzeugt wird, wobei von den kommunikationsbasierten Informationen die durch digitale Karten, die im Kraftfahrzeug vorhanden sind, erhaltenen Informationen basierend auf dem GPS-Signal, nicht umfasst sind, wobei mittels der mindestens einen kommunikationsbasierten Information mindestens eine Information über die zukünftig von dem Kraftfahrzeug wahrscheinlich einzunehmende Geschwindigkeit ermittelt wird, die zur Auswahl der Betriebsstrategie herangezogen wird,
**dadurch gekennzeichnet,**
**dass**, wenn aus der ermittelten, mindestens einen Information über die zukünftig von dem Kraftfahrzeug wahrscheinlich einzunehmende Geschwindigkeit eine zukünftige Geschwindigkeitsbegrenzung abgeleitet wird, als Betriebsstrategie im ersten Abschnitt der Geschwindigkeitsbegrenzung der Betriebszustand 'elektromotorischer Betrieb' ausgewählt wird.

2. Verfahren nach Anspruch 1,
**dadurch gekennzeichnet,**
**dass** die kommunikationsbasierte Information eine Information aus einer Fahrzeug-zu-Infrastruktur- und/oder eine Fahrzeug-zu-Fahrzeug-Kommunikation ist.

3. Verfahren nach Anspruch 1 oder 2,
**dadurch gekennzeichnet,**
**dass** mittels der mindestens einen kommunikationsbasierten Information mindestens eine Information über den Höhen- und/oder Kurvenverlauf der zukünftig von dem Kraftfahrzeug zurückzulegenden Strecke und/oder den aktuellen Verkehrszustand der zukünftig zu durchfahrenen Strecke und/oder eine Baustelleninformation und/oder eine Information über die Kolonnengeschwindigkeit der umgebenden Kraftfahrzeuge ermittelt wird und hieraus die zukünftig notwendige Antriebsleistung bestimmt wird, die zur Auswahl der Betriebsstrategie herangezogen wird.

4. Verfahren nach Anspruch 1,
**dadurch gekennzeichnet,**
**dass** die mindestens eine Information über die zukünftig von dem Kraftfahrzeug wahrscheinlich einzunehmende Geschwindigkeit mittels Auswertung der Kolonnengeschwindigkeit der vorausfahrenden Kraftfahrzeuge und/oder mittels Auswertung einer Baustelleninformation und/oder mittels Schildererkennung und/oder mittels Ampelstatuserkennung per Kamera und/oder auf Basis von Fahrzeugleitinformationen ermittelt wird.

5. Verfahren nach Anspruch 1 oder 4,
**dadurch gekennzeichnet,**
**dass**, wenn aus der mindestens einen Information über die zukünftig von dem Kraftfahrzeug wahrscheinlich einzunehmende Geschwindigkeit ein zukünftiger Kraftfahrzeugstopp abgeleitet wird, als Betriebsstrategie sofort der Betriebszustand 'elektromotorischer Betrieb' und/oder 'Rekuperationsbetrieb' ausgewählt wird.

6. Verfahren nach einem der vorhergehenden Ansprüche,
**dadurch gekennzeichnet,**
**dass**, wenn mittels der mindestens einen kommunikationsbasierten Information mindestens eine Information über einen Abschnitt auf der zukünftig von dem Kraftfahrzeug zurückzulegenden Strecke ermittelt wird, auf dem eine geringe Lärmemission angezeigt ist, hieraus für diesen Abschnitt die Betriebsstrategie mit dem Betriebszustand 'elektromotorischer Betrieb' ausgewählt wird.

7. Verfahren nach einem der vorhergehenden Ansprüche,
**dadurch gekennzeichnet,**
**dass** zusätzlich bei der Auswahl der Betriebsstrategie mindestens eine Information aus einer digitalen Karte berücksichtigt wird.

8. Vorrichtung zur prädiktiven Steuerung und/oder Regelung eines Hybridantriebs in einem Kraftfahrzeug, wobei in der Vorrichtung Mittel vorgesehen sind, welche eine Betriebsstrategie abhängig von einem gewünschten Betriebsziel auswählen, wobei die Mittel zur Auswahl der Betriebsstrategie mindestens eine kommunikationsbasierte Information berücksichtigen, wobei die kommunikationsbasierte Information mittels einer Kommunikation des Kraftfahrzeugs mit ortsfesten und/oder sich bewegenden Gegenstellen erzeugt wird, wobei von den kommunikationsbasierten Informationen, die durch digitale Karten, die im Kraftfahrzeug vorhanden sind, erhaltenen Informationen basierend auf dem GPS-Signal, nicht umfasst sind, wobei die Mittel zur Auswahl der Betriebsstrategie aus der mindestens einen kommunikationsbasierten Information mindestens eine Information über die zukünftig von dem Kraftfahrzeug wahrscheinlich einzunehmende Geschwindigkeit ermitteln, **dadurch gekennzeichnet,**
**dass** die Mittel zur Auswahl der Betriebsstrategie, wenn aus der ermittelten, mindestens einen Information über die zukünftig von dem Kraftfahrzeug wahrscheinlich einzunehmende Geschwindigkeit eine zukünftige Geschwindigkeitsbegrenzung abgeleitet wird, als Betriebsstrategie im ersten Abschnitt der Geschwindigkeitsbegrenzung die Betriebsstrategie mit dem Betriebszustand 'elektromotorischer Betrieb' auswählen.

9. Vorrichtung nach Anspruch 8,
**dadurch gekennzeichnet,**
**dass** die kommunikationsbasierte Information eine Information aus einer Fahrzeug-zu-Infrastruktur- und/oder eine Fahrzeug-zu-Fahrzeug-Kommunikation ist.

10. Vorrichtung nach Anspruch 8 oder 9,
**dadurch gekennzeichnet,**
**dass** die Mittel zur Auswahl der Betriebsstrategie aus der mindestens einen kommunikationsbasierten Information mindestens eine Information über den Höhen- und/oder Kurvenverlauf der zukünftig von dem Kraftfahrzeug zurückzulegenden Strecke und/oder den aktuellen Verkehrszustand der zukünftig zu durchfahrenen Strecke und/oder eine Baustelleninformation und/oder eine Information über die Kolonnengeschwindigkeit der umgebenden Kraftfahrzeuge ermitteln und hieraus die zukünftig notwendige Antriebsleistung bestimmen, die zur Auswahl der Betriebsstrategie herangezogen wird.

11. Vorrichtung nach Anspruch 8,
**dadurch gekennzeichnet,**
**dass** die Mittel zur Auswahl der Betriebsstrategie die mindestens eine Information über die zukünftig von dem Kraftfahrzeug wahrscheinlich einzunehmende Geschwindigkeit durch Auswertung der Kolonnengeschwindigkeit der vorausfahrenden Kraftfahrzeuge und/oder durch Auswertung einer Baustelleninformation und/oder durch Schildererkennung und/oder durch Ampelstatuserkennung per Kamera und/oder auf Basis von Fahrzeugleitinformationen ermitteln.

12. Vorrichtung nach einem der Ansprüche 8 bis 11,
**dadurch gekennzeichnet,**
**dass** die Mittel zur Auswahl der Betriebsstrategie, wenn aus der mindestens einen Information über die zukünftig von dem Kraftfahrzeug wahrscheinlich einzunehmende Geschwindigkeit ein zukünftiger Kraftfahrzeugstopp abgeleitet wird, als Betriebsstrategie sofort den Betriebszustand 'elektromotorischer Betrieb' und/oder 'Rekuperationsbetrieb' auswählen.

13. Vorrichtung nach einem der Ansprüche 8 bis 12,
**dadurch gekennzeichnet,**
**dass** die Mittel zur Auswahl der Betriebsstrategie, wenn auf Basis der mindestens einen kommunikationsbasierten Information mindestens eine Information über einen Abschnitt auf der zukünftig von dem Kraftfahrzeug zurückzulegenden Strecke ermittelt wird, auf dem eine geringe Lärmemission angezeigt ist, hieraus für diesen Abschnitt als Betriebsstrategie den Betriebszustand 'elektromotorischer Betrieb' auswählen.

14. Vorrichtung nach einem der Ansprüche 8 bis 13,
**dadurch gekennzeichnet,**
**dass** die Mittel zur Auswahl der Betriebsstrategie zusätzlich mindestens eine Information aus einer digitalen Karte berücksichtigen.

15. Hybridfahrzeug mit einer Vorrichtung nach einem der Ansprüche 8 bis 14.

## Claims

1. Method for performing predictive open-loop and/or closed-loop control of a hybrid drive in a motor vehicle, wherein the open-loop and/or closed-loop control is carried out by selecting the operating strategy as a function of a desired operational objective,
wherein at least one communication-based information item is taken into account in the selection of the operating strategy, which information item is generated by means of a communication of the motor vehicle with one or more positionally fixed and/or moving opposing stations, wherein the communication-based information does not include the information which is obtained by means of digital maps present in the motor vehicle, on the basis of the GPS signal, wherein at least one information item relating to the speed which is likely to be adopted by the motor vehicle in future, and which is used for the selection of the operating strategy, is determined by means of the at least one communication-based information item, **characterized**
**in that**, if a future speed limit is derived from the at least one determined information item relating to the speed which is likely to be adopted by the motor vehicle in future, the "electric motor operating mode" operating state is selected as the operating strategy in the first section of the speed limit.

2. Method according to Claim 1,
**characterized**
**in that** the communication-based information item is an information item from a vehicle-to-infrastructure communication and/or a vehicle-to-vehicle communication.

3. Method according to Claim 1 or 2,
**characterized**
**in that** at least one information item relating to the altitude profile and/or bend profile of the route to be traveled along by the motor vehicle in future and/or the current traffic state of the route to be traveled along in future and/or a roadworks information item and/or an information item relating to the speed of the surrounding motor vehicles in backed-up traffic is determined by means of the at least one communication-based information item, and the driving power which will be necessary in future, and which is used for the selection of the operating strategy, is determined therefrom.

4. Method according to Claim 1,
**characterized**
**in that** the at least one information item relating to the speed which is likely to be adopted by the motor vehicle in future is determined by evaluating the speed of the motor vehicles traveling ahead in backed-up traffic and/or by evaluating a roadworks information item and/or by means of road sign recognition and/or by means of traffic light status recognition by camera and/or on the basis of vehicle navigation information.

5. Method according to Claim 1 or 4,
**characterized**
**in that**, if future stopping of the motor vehicle is derived from the at least one information item relating to the speed which is likely to be adopted by the motor vehicle in future, the "electric motor operating mode" and/or "regenerative operating mode" operating state are/is selected immediately as the operating strategy.

6. Method according to one of the preceding claims,
**characterized**
**in that**, if at least one information item relating to a section, for which low noise emission is displayed, on the route which is to be traveled along by the motor vehicle in future is determined by means of the at least one communication-based information item, the operating strategy with the "electric motor operating mode" operating state is selected from said information item for this section.

7. Method according to one of the preceding claims,
**characterized**
**in that** at least one information item from a digital map is additionally taken into account in the selection of the operating strategy.

8. Device for performing predictive open-loop and/or closed-loop control of a hybrid drive in a motor vehicle, wherein means which select an operating strategy as a function of a desired operational objective are provided in the device,
wherein the means for selecting the operating strategy take into account at least one communication-based information item, wherein the communication-based information item is generated by means of a communication of the motor vehicle with positionally fixed and/or moving opposing stations, wherein the communication-based information does not include the information which is obtained by means of digital maps present in the motor vehicle, on the basis of the GPS signal, wherein the means for selecting the operating strategy determine, from the at least one communication-based information item, at least one information item relating to the speed which is likely to be adopted by the motor vehicle in future,
**characterized**
**in that**, if a future speed limit is derived from the at least one determined information item relating to the speed which is likely to be adopted by the motor vehicle in future, the means for selecting the operating strategy select the operating strategy with the "electric motor operating mode" operating state as the operating strategy in the first section of the speed limit.

9. Device according to Claim 8,
**characterized**
**in that** the communication-based information item is an information item from a vehicle-to-infrastructure communication and/or a vehicle-to-vehicle communication.

10. Device according to Claim 8 or 9,
**characterized**
**in that** the means for selecting the operating strategy determine, from the at least one communication-based information item, at least one information item relating to the altitude profile and/or bend profile of the route which is to be traveled along by the motor vehicle in future and/or the current traffic state of the route which is to be traveled along in future and/or a roadworks information item and/or an information item relating to the speed of the surrounding motor vehicles in backed-up traffic, and determine therefrom the driving power which will be necessary in future, and which is used for the selection of the operating strategy.

11. Device according to Claim 8,
**characterized**
**in that** the means for selecting the operating strategy determine the at least one information item relating to the speed which is likely to be adopted by the motor vehicle in future by evaluating the speed of the motor vehicles traveling ahead in backed-up traffic and/or by evaluating a roadworks information item and/or by road sign recognition and/or by traffic light status recognition by camera and/or on the basis of vehicle navigation information.

12. Device according to one of Claims 8 to 11,
**characterized**
**in that**, if future stopping of the motor vehicle is derived from the at least one information item relating to the speed which is likely to be adopted by the motor vehicle in future, the means for selecting the operating strategy immediately select the "electric motor operating mode" and/or "regenerative operating mode" operating state as the operating strategy.

13. Device according to one of Claims 8 to 12,
**characterized**
**in that**, if at least one information item relating to a section, for which low noise emission is displayed, on the route which is to be traveled along by the motor vehicle in future is determined on the basis of the at least one communication-based information item, the means for selecting the operating strategy select the "electric motor operating mode" operating state from said information item as the operating strategy for this section.

14. Device according to one of Claims 8 to 13,
**characterized**
**in that** the means for selecting the operating strategy additionally take into account at least one information item from a digital map.

15. Hybrid vehicle having a device according to one of Claims 8 to 14.

## Revendications

1. Procédé de commande prédictive et/ou de régulation d'un entraînement hybride d'un véhicule automobile,
la commande et/ou la régulation s'effectuant en fonction d'un objectif de conduite souhaité par l'intermédiaire d'une sélection de la stratégie de conduite,
au moins une information basée sur une communication étant prise en compte dans la sélection de la stratégie de conduite et étant formée au moyen d'une communication entre le véhicule automobile et un ou plusieurs postes correspondants fixes et/ou mobiles,
les informations basées sur le signal GPS et obtenues à partir de cartes numériques présentes dans le véhicule automobile n'étant pas incluses dans les informations basées sur une communication,
au moins une information sur la vitesse que le véhicule automobile devra probablement respecter dans le futur et utilisée pour la sélection de la stratégie de conduite étant déterminée au moyen de la ou des informations basées sur une communication,
**caractérisé en ce que**
au cas où une limite future de vitesse est déduite de la ou les informations déterminées concernant la vitesse que le véhicule automobile devra probablement respecter dans le futur, l'état de fonctionnement 'fonctionnement par moteur électrique" est sélectionné comme stratégie de conduite dans la première partie de la limitation de vitesse.

2. Procédé selon la revendication 1, **caractérisé en ce que** l'information basée sur une communication est une information provenant d'une communication entre le véhicule et une infrastructure ou entre véhicules.

3. Procédé selon les revendications 1 ou 2, **caractérisé en ce qu'**au moyen de la ou des informations basées sur une communication, au moins une information concernant l'évolution de l'altitude et/ou de la courbe du parcours qui devra être suivi dans le futur par le véhicule automobile, une information sur l'état actuel du trafic sur le parcours qui devra être suivi dans le futur, une information concernant des chantiers et/ou une information concernant la vitesse de la file formée par les véhicules automobiles environnants est déterminée, la puissance d'entraînement nécessaire dans le futur et utilisée pour la sélection de la stratégie de conduite étant déterminée à partir de cette information.

4. Procédé selon la revendication 1, **caractérisé en ce que** la ou les informations concernant la vitesse que le véhicule automobile devra probablement respecter dans le futur est déterminée au moyen d'une évaluation de la vitesse de la file formée des véhicules automobiles précédents, et/ou au moyen d'une évaluation d'une information concernant les chantiers, et/ou au moyen d'une reconnaissance de plaque d'immatriculation, et/ou au moyen de la détection par caméra de l'état des feux de circulation et/ou sur base d'informations de guidage du véhicule.

5. Procédé selon les revendications 1 ou 4, **caractérisé en ce qu'**au cas où un arrêt futur du véhicule automobile est déduit de la ou des informations concernant la vitesse que le véhicule automobile devra probablement respecter dans le futur, les états de fonctionnement "fonctionnement sur moteur électrique" et/ou "fonctionnement en récupération" sont immédiatement sélectionnés comme stratégie de conduite.

6. Procédé selon l'une des revendications précédentes, **caractérisé en ce qu'**au cas où au moins une information concernant une partie du parcours que le véhicule automobile devra suivre dans le futur et pour lequel il est indiqué que l'émission de bruit doit être basse est déterminée au moyen de la ou des informations basées sur une communication, la stratégie de conduite qui présente l'état de fonctionnement "fonctionnement sur moteur électrique" est sélectionnée pour cette partie.

7. Procédé selon l'une des revendications précédentes, **caractérisé en ce qu'**au moins une information provenant d'une carte numérique est prise en compte dans la sélection de la stratégie de conduite.

8. Dispositif de commande et/ou de régulation prédictive d'un entraînement hybride d'un véhicule automobile, le dispositif présentant des moyens qui sélectionnent une stratégie de conduite en fonction d'un objectif de conduite souhaité, les moyens de sélection de la stratégie de conduite prenant compte d'au moins une information basée sur une communication, l'information basée sur une communication étant formée au moyen d'une communication entre le véhicule automobile et des postes complémentaires fixes et/ou des postes complémentaires mobiles, les informations basées sur le signal GPS et obtenues par des cartes numériques qui sont présentes dans le véhicule automobile n'étant pas incluses dans les informations basées sur une communication, les moyens de sélection de la stratégie de conduite déterminant à partir de la ou des informations basées sur une communication au moins une information concernant la vitesse que le véhicule automobile devra probablement respecter dans le futur,
**caractérisé en ce que**
au cas où une future limitation de vitesse est déduite de la ou des informations déterminées concernant la vitesse que le véhicule automobile devra probablement respecter dans le futur, le moyen de sélection de la stratégie de conduite sélectionne comme stratégie de conduite la stratégie de conduite présentant l'état de fonctionnement "fonctionnement sur moteur électrique" dans la première partie de la limitation de vitesse.

9. Dispositif selon la revendication 8, **caractérisé en ce que** l'information basée sur une communication est une information provenant d'une communication entre le véhicule et une infrastructure ou entre véhicules.

10. Dispositif selon les revendications 8 ou 9, **caractérisé en ce que** les moyens de sélection de la stratégie de conduite déterminent à partir de la ou des informations basées sur une communication au moins une information concernant l'évolution de l'altitude et/ou de la courbe du parcours qui devra être suivi dans le futur par le véhicule automobile, et/ou une information sur l'état actuel du trafic sur le parcours qui devra être suivi dans le futur, et/ou une information concernant des chantiers et/ou une information concernant la vitesse de la file formée par les véhicules automobiles environnants est déterminée, la puissance d'entraînement nécessaire dans le futur et utilisée pour la sélection de la stratégie de conduite étant déterminée à partir de cette information.

11. Dispositif selon la revendication 8, **caractérisé en ce que** les moyens de sélection de la stratégie de conduite déterminent la ou les informations concernant la vitesse que le véhicule automobile devra probablement respecter dans le futur est déterminée au moyen d'une évaluation de la vitesse de la file formée des véhicules automobiles précédents et/ou au moyen d'une évaluation d'une information concernant les chantiers, et/ou au moyen d'une reconnaissance de plaque d'immatriculation, et/ou au moyen de la détection par caméra de l'état des feux de circulation et/ou sur base d'informations de guidage du véhicule.

12. Dispositif selon l'une des revendications 8 à 11, **caractérisé en ce qu'**au cas où un arrêt futur du véhicule automobile est déduit de la ou des informations concernant la vitesse que le véhicule automobile devra probablement respecter dans le futur, les moyens de sélection de la stratégie de conduite sélectionnent immédiatement comme stratégie de conduite les états de fonctionnement "fonctionnement sur moteur électrique" et/ou "fonctionnement en récupération".

13. Dispositif selon l'une des revendications 8 à 12, **caractérisé en ce qu'**au cas où au moins une information concernant une partie du parcours que le véhicule automobile devra suivre dans le futur et pour lequel il est indiqué que l'émission de bruit doit être basse est déterminée au moyen de la ou des informations basées sur une communication, les moyens de sélection de la stratégie de conduite sélectionnent comme stratégie de conduite pour cette partie l'état de fonctionnement "fonctionnement sur moteur électrique".

14. Dispositif selon l'une des revendications 8 à 13, **caractérisé en ce que** les moyens de sélection de la stratégie de conduite tiennent de plus en compte au moins une information provenant d'une carte numérique.

15. Véhicule hybride doté d'un dispositif selon l'une des revendications 8 et 14.
